# EUROPÄISCHE PATENTSCHRIFT

(11) **EP 1 600 744 B1**
(45) Veröffentlichungstag und Bekanntmachung des Hinweises auf die Patenterteilung: **09.09.2009**
(21) Anmeldenummer: 05007513.4
(22) Anmeldetag: 06.04.2005
(51) Int. Cl.: G01F 1/66

(54) **Sende- und Empfangsschaltung für ein Ultraschalldurchflussmessgerät und Verfahren zum Betreiben einer solchen Sende- und Empfangsschaltung.**
Transmitting and receiving circuit for an ultrasonic flowmeter and method of operating such a transmitting and receiving circuit.
Circuit d'émission et de réception pour débitmètre ultrasonore et procédé d'opération d' un tel circuit d'émission et de réception.

(30) Priorität: 27.05.2004 DE 102004026556
(43) Veröffentlichungstag der Anmeldung: 30.11.2005
(73) Patentinhaber: Krohne AG, 4019 Basel (CH)
(72) Erfinder: Huijzer, Arie, 3363 BS Sliedrecht (NL)
(74) Vertreter: Gesthuysen, von Rohr & Eggert

(56) Entgegenhaltungen:
- WO-A-03/036240
- US-B1- 6 584 861
- PATENT ABSTRACTS OF JAPAN Bd. 014, Nr. 443 (C-0762), 21. September 1990 (1990-09-21) & JP 02 174837 A (HITACHI MEDICAL CORP), 6. Juli 1990 (1990-07-06)

## Beschreibung

Die Erfindung betrifft eine Sende- und Empfangsschaltung für ein Ultraschalldurchflußmeßgerät, mit einem Ultraschallwandleranschluß zum Anschluß an einen Ultraschallwandler des Ultraschalldurchflußmeßgeräts, einem Verstärker mit einem ersten Eingang und einem zweiten Eingang und einer Signalerzeugungseinrichtung zur Ansteuerung des Ultraschallwandlers, wobei der erste Eingang des Verstärkers mit der Signalerzeugungseinrichtung verbunden ist, der zweite Eingang des Verstärkers einerseits mit dem Ultraschallwandleranschluß und andererseits über ein Rückkoppelelement mit dem Ausgang des Verstärkers verbunden ist. Die Erfindung betrifft ferner ein eine solche Sende- und Empfangsschaltung verwendendes Ultraschalldurchflußmeßgerät sowie ein Verfahren zum Betreiben einer solchen Sende- und Empfangsschaltung.

Bei Ultraschalldurchflußmeßgeräten werden Ultraschallwellen zur Geschwindigkeits- und Durchflußmessung eines durch ein Meßrohr strömenden Mediums verwendet. Parameter, über die die Strömung des Mediums erfaßt werden können, sind z. B. Laufzeitdifrerenzen, Frequenzänderungen oder Phasenverschiebungen. Dazu werden Ultraschallwellen mittels Ultraschallwandlern kontinuierlich oder impulsförmig in das strömende Medium ausgesandt und wieder empfangen. Dabei sind die wesentlichen Grundprinzipien, die Ultraschalldurchflußmessungen zugrunde liegen, einerseits der sogenannte Mitführungseffekt, der darauf beruht, daß die Mitführung der Ultraschallwellen in dem strömenden Medium die Ausbreitungsgeschwindigkeit der Ultraschallwellen ändert, und andererseits der Doppler-Effekt, der zu einer Frequenzänderung führt, wenn sich Sender und Empfänger relativ zueinander bewegen,

Im allgemeinen weist ein Ultraschalldurchflußmeßgerät wenigstens zwei Ultraschallwandler auf, die typischerweise in Strömungsrichtung zueinander versetzt angeordnet sind, wobei die Ultraschallwandler abwechselnd als Sender und als Empfänger betrieben werden können, so daß von dem einen Ultraschallwandler ausgesandte Ultraschallwellen nach Durchlaufen einer Strecke in dem strömenden Medium von dem anderen Ultraschallwandler empfangen werden.

Aus dem zuvor Gesagten wird schon ersichtlich, daß eine Sende- und Empfangsschaltung für ein Ultraschalldurchflußmeßgerät, also eine solche Schaltung, die sowohl für den Sendebetrieb als auch für den Empfangsbetrieb des Ultraschalldurchflußmeßgeräts geeignet sein soll, gewisse Anforderungen erfüllen muß. Insbesondere muß bei einer solchen Sende- und Empfangsschaltung nämlich gewährleistet sein, daß Leistung, Stabilität und ein akzeptables Signal-zu-Rausch-Verhältnis sowohl im Sendebetrieb als auch im Empfangsbetrieb möglich sind. Problematisch ist nämlich, daß Sendebetrieb einerseits und Empfangsbetrieb andererseits teilweise gänzlich unterschiedliche Anforderungen an die verwendete Schaltung stellen, wird doch im Sendebetrieb von der Signalerzeugungseinrichtung ein Spannungssignal generiert, das einem Ultraschallwandler zugeleitet wird, damit von diesem Ultraschallwellen in das strömende Medium gesandt werden können, während im Empfangsbetrieb kein Ultraschallsignal erzeugt und ausgesandt wird, sondern ein möglichst guter Empfang eines Ultraschallsignals gefordert wird.

Das Dokument WO-A-03/036240 beschreibt eine Sende- und Empfangsschaltung für ein Ultraschalldurchflussmessgerät. Bei herkömmlichen Sende- und Empfangsschaltungen für Ultraschalldurchflußmeßgeräte bestehen bezüglich dieser Problematik Defizite. Insbesondere ist kein befriedigendes Signal-zu-Rausch-Verhältnis erzielbar.

Dementsprechend ist es die Aufgabe der Erfindung, eine derartige Sende- und Empfangsschaltung für ein Ultraschalldurchflußmeßgerät sowie ein derartiges Verfahren zum Betreiben einer solchen Sende- und Empfangsschaltung anzugeben, mit denen ein gutes Signal-zu-Rausch-Verhältnis erzielbar ist

Ausgehend von der eingangs beschriebenen Sende- und Empfangsschaltung ist die zuvor hergeleitete und aufgezeigte Aufgabe dadurch gelöst, daß die Impedanz des Rückkoppelelements veränderbar ist.

Im Rahmen der Erfindung ist nämlich erkannt worden, daß eine wesentliche Verbesserung der Leistung der Sende- und Empfangsschaltung, insbesondere ein wesentlich verbessertes Signal-zu-Rausch-Verhältnis, dadurch erzielbar ist, daß eine Anpassung der Impedanz des Rückkoppelelements für verschiedene Betriebsarten der Sende- und Empfangsschaltung erfolgt. Im Sendebetrieb, in dem von der Signalerzeugungseinrichtung Spannungssignale erzeugt und an den mit dem Ultraschallwandleranschluß verbundenen Ultraschallwandler geliefert werden, ist es günstig, wenn die Impedanz des Rückkoppelelements einen relativ kleinen Wert annimmt, um maximale Sendeleistung zu erzielen. Andererseits ist es im Empfangsbetrieb vorteilhaft, wenn die Impedanz des Rückkoppelelements einen eher größeren Wert annimmt, da mit der Größe der Impedanz des Rückkoppelelements auch der Verstärkungsfaktor steigt.

Schließlich kann auch ein sogenannter Reflektionsbetrieb vorgesehen sein, in dem die Signalerzeugungseinrichtung ein Spannungssignal erzeugt und an den Ultraschallwandler liefert, wobei allerdings dabei kein Meßbetrieb durchgeführt werden soll, sondern vielmehr ein Prüfbetrieb stattfindet, im Rahmen dessen z. B. die Ausbreitungszeit in einem im Ultraschalldurchflußmeßgerät vorgesehenen Ultraschallwellenleiter gemessen werden kann, geprüft werden kann, ob alle Wandler bzw. Kabel angeschlossen sind, die Eigenschaften der Wandler geprüft werden oder ein Reflektionssignal innerhalb des das Meßrohr durchströmenden Mediums erfaßt wird. In diesem Reflektionsbetrieb erfolgt damit einerseits eine Erzeugung und Abgabe eines Spannungssignals von der Signalerzeugungseinrichtung, andererseits muß jedoch das reflektierte Signal von der Sende- und Empfangsschaltung aufgenommen und verarbeitet werden. Insofern kann im Reflektionsbetrieb vorzugsweise auch eine eher höhere Impedanz des Rückkoppelelements vorgesehen sein.

Die Veränderbarkeit der Impedanz des Rückkoppelelements kann nun auf verschiedene Weisen erzielt werden. Gemäß einer bevorzugten Weiterbildung der Erfindung ist vorgesehen, daß eine Ansteuereinrichtung zur Steuerung der Impedanz des Rückkoppelelements verwendet wird. Insbesondere kann dann gemäß einer bevorzugten Weiterbildung der Erfindung als Rückkoppelelement ein elektrischer Schalter, ein elektrisches Potentiometer oder ein Fotokoppler vorgesehen sein. Insbesondere ist dabei eine derartige Ansteuerung des Rückkoppelelements vorgesehen, daß im Sendebetrieb eine eher geringe Impedanz, im Empfangsbetrieb eine eher größere Impedanz und im Reflektionsbetrieb ebenfalls eine eher größere Impedanz erzielt wird.

Alternativ zu einer Ansteuereinrichtung für das Rückkoppelelement kann als Rückkoppelelement ein nichtlineares Element vorgesehen sein. Ein derartiges nichtlineares Element als Rückkoppelelement ist dabei vorzugsweise derart ausgebildet, daß bei einem über den Ultraschallwandleranschluß erfaßten Signal eine höhere Impedanz und bei von der Signalerzeugungseinrichtung erzeugtem Signal eine geringere Impedanz wirkt. Eine Steuerung des nichtlinearen Elements ist also nicht erforderlich, da das nichtlineare Element von sich aus, nämlich aufgrund seines Aufbaus im Sendebetrieb einerseits, wenn kein Signal empfangen jedoch ein Spannungssignal ausgesandt wird, und im Empfangsbetrieb andererseits, wenn ein Signal empfangen wird, ohne daß ein Spannungssignal erzeugt und ausgesandt wird, unterschiedliche Impedanzen zeigt.

Als nichtlineares Element kann gemäß einer bevorzugten Weiterbildung der Erfindung eine Schaltung mit Dioden und wenigstens einem Widerstand vorgesehen sein. Ganz bevorzugt ist eine derartige Schaltung vorgesehen, bei der, einander parallel geschaltet, ein Widerstand und ein Paar zueinander entgegengesetzt ausgerichteter und einander parallel geschalteter Dioden vorgesehen ist.

Schließlich ist gemäß einer bevorzugten Weiterbildung der Erfindung vorgesehen, daß der Verstärker einen nichtinvertierenden Eingang und einen invertierenden Eingang aufweist, wobei der nichtinvertierende Eingang als erster Eingang und der invertierende Eingang als zweiter Eingang vorgesehen ist.

Das eingangs beschriebene Verfahren zum Betreiben einer Sende- und Empfangsschaltung eines Ultraschalldurchflußmeßgeräts, mit dem die weiter oben hergeleitete und aufgezeigte Aufgabe gelöst ist, ist dadurch gekennzeichnet, daß die Impedanz des Rückkoppelelements gesteuert wird.

Eine aktive Steuerung der Impedanz des Rückkoppelelements ist erfindungsgemäß dann vorgesehen, wenn kein derartiges Rückkoppelelement vorgesehen ist, das, wie das zuvor als nichtlineares Element bezeichnete Rückkoppelelement, von sich aus im Sendebetrieb einerseits und im Empfangsbetrieb andererseits voneinander verschiedene Impedanzen zeigt.

Das erfindungsgemäße Verfahren zum Betreiben einer Sende- und Empfangsschaltung erfährt eine bevorzugte Ausgestaltung dadurch, daß die Sende- und Empfangsschaltung abwechselnd in einem Sendebetrieb und in einem Empfangsbetrieb betrieben wird, wobei im Sendebetrieb die Signalerzeugungseinrichtung den Ultraschallwandler mit einem Signal ansteuert und die Impedanz des Rückkoppelelements auf einen geringen Wert gesteuert wird, und im Empfangsbetrieb keine Ansteuerung des Ultraschallwandlers mit einem Signal erfolgt und die Impedanz des Rückkoppelelements auf einen höheren Wert gesteuert wird.

Ferner ist gemäß einer bevorzugten Weiterbildung der Erfindung vorgesehen, daß die Sende- und Empfangsschaltung alternativ zu dem Sendebetrieb und dem Empfangsbetrieb in einem Reflektionsbetrieb betrieben wird, in dem die Signalerzeugungseinrichtung den Ultraschallwandler mit einem Signal ansteuert und die Impedanz des Rückkoppelelements auf einen höheren Wert gesteuert wird.

Insgesamt eröffnet die Erfindung damit einen verbesserten Betrieb eines Ultraschalldurchflußmeßgeräts, da eine in allen Betriebsarten gleiche Eingangs- und Ausgangsimpedanz erzielbar ist. Dabei gibt es im einzelnen eine Vielzahl von Möglichkeiten, die erfindungsgemäße Sende- und Empfangsschaltung sowie das erfindungsgemäße Verfahren zum Betreiben der Sende- und Empfangsschaltung auszugestalten und weiterzubilden. Dazu wird auf die den unabhängigen Patentansprüchen nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch das Prinzip eines Ultraschalldurchflußmeßgeräts mit zwei Ultraschallwandlern und deren Anschlüssen,
- Fig. 2: schematisch eine Sende- und Empfangsschaltung für ein Ultraschalldurchflußmeßgerät gemäß einem ersten bevorzugten Ausführungsbeispiel der Erfindung,
- Fig. 3: schematisch eine Sende- und Empfangsschaltung für ein Ultraschalldurchflußmeßgerät gemäß einem zweiten bevorzugten Ausführungsbeispiel der Erfindung und
- Fig. 4: ein Beispiel für ein nichtlineares Element als Rückkoppelelement für die Sende- und Empfangsschaltung gemäß dem zweiten bevorzugten Ausführungsbeispiel der Erfindung.

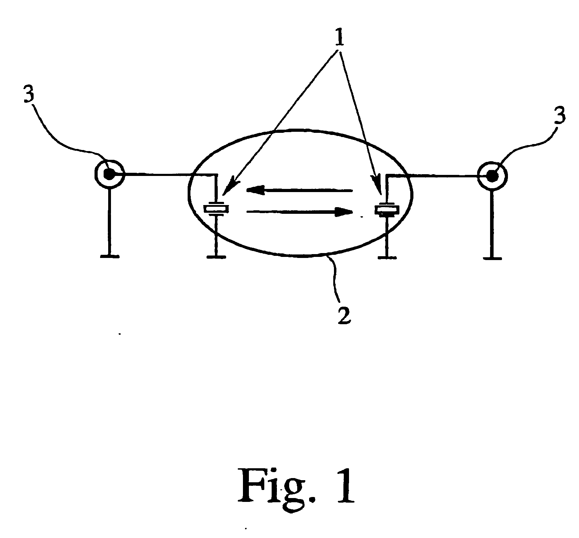

In Fig. 1 ist schematisch das Prinzip eines Ultraschalldurchflußmeßgeräts skizziert. Dabei sind zwei Ultraschallwandler 1 vorgesehen, die in einem von einem Medium durchströmten Meßrohr 2 in Strömungsrichtung zueinander versetzt angeordnet sind. Die Darstellung in Fig. 1 soll dabei einem Schnitt durch ein zylinderförmiges Meßrohr 2 entsprechen, wobei die Schnittebene durch die beiden Ultraschallwandler 1 bestimmt wird und damit in einem von 90° verschiedenen Winkel zur Längsachse des Meßrohrs 2 sowie damit auch zur Strömungsrichtung des durch das Meßrohr 2 strömenden Mediums verläuft.

Die beiden Ultraschallwandler 1 sind jeweils mit einem Schaltungsanschluß 3 versehen, der zum Anschluß an eine Sende- und Empfangsschaltung dient. Mit den Schaltungsanschlüssen 3 verbindbare Sende- und Empfangsschaltungen gemäß bevorzugter Ausführungsbeispiele der Erfindung sind im folgenden beschrieben.

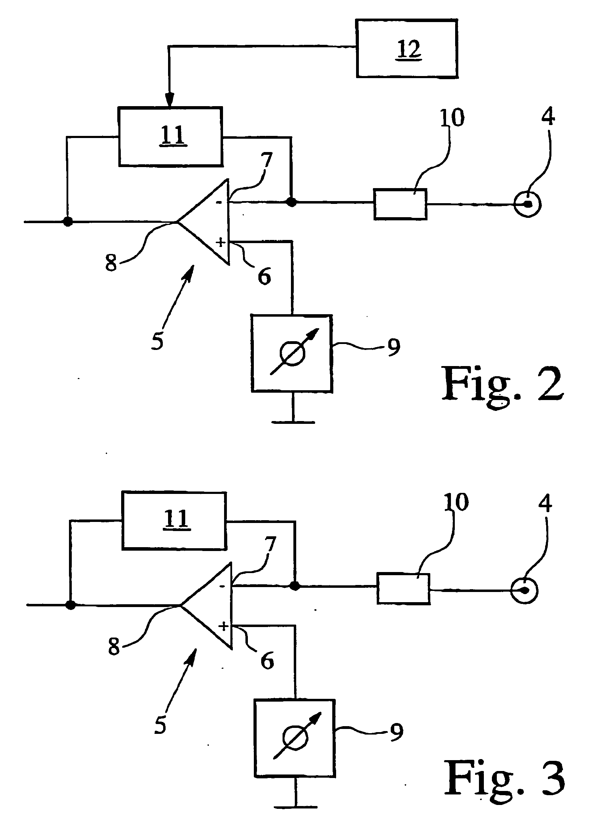

Fig. 2 zeigt eine Sende- und Empfangsschaltung für ein Ultraschalldurchflußmeßgerät gemäß einem ersten bevorzugten Ausführungsbeispiel der Erfindung. Dabei ist ein Ultraschallwandleranschluß 4 vorgesehen, über den ein Ultraschallwandler 1, nämlich über dessen Schaltungsanschluß 3, angeschlossen werden kann. Weiterhin ist ein Operationsverstärker 5 mit einem ersten, nichtinvertierenden Eingang 6 und einem zweiten, invertierenden Eingang 7 sowie einem Ausgang 8 vorgesehen. Der nichtinvertierende Eingang 6 des Operationsverstärkers 5 ist mit einer Signalerzeugungseinrichtung 9 verbunden, die im Sendebetrieb und im Reflektionsbetrieb des Ultraschalldurchflußmeßgeräts Spannungssignale erzeugt und ausgibt. Der nichtinvertierende Eingang 7 des Operationsverstärkers 5 ist einerseits über einen Widerstand 10 mit dem Ultraschallwandleranschluß 4 verbunden und ist andererseits über ein Rückkoppelelement 11 auf den Ausgang 8 des Operationsverstärkers 5 geführt.

Als Rückkoppelelement 11 ist nun ein derartiges Element vorgesehen, dessen Impedanz steuerbar ist. Als Rückkoppelelement 11 können damit z. B. ein elektrischer Schalter, ein elektrisches Potentiometer oder ein Fotokoppler vorgesehen sein. Die Ansteuerung des Rückkoppelelements 11 erfolgt über eine Ansteuereinrichtung 12, und zwar wie folgt:

Im Sendebetrieb, in dem von der Signalerzeugungseinrichtung 9 Spannungssignale erzeugt und ausgegeben werden, damit von dem Ultraschallwandler 1 Ultraschallsignale in das strömende Medium abgegeben werden können, steuert die Ansteuereinrichtung 12 die Impedanz des Rückkoppelelements 11 derart, daß diese einen geringeren Wert annimmt, um maximale Sendeleistung zu erzielen. Im Empfangsbetrieb des Ultraschalldurchflußmeßgeräts jedoch, in dem von der Signalerzeugungseinrichtung 9 keine Spannungssignale erzeugt und ausgegeben werden und es nur auf den Empfang und die Verstärkung eines von dem Ultraschallwandler 1 erfaßten Signals ankommt, steuert die Ansteuereinrichtung 12 die Impedanz des Rückkoppelelements 11 derart, daß diese einen größeren Wert annimmt. Mit steigender Impedanz des Rückkoppelelements 11 steigt nämlich auch die Verstärkungsleistung des Operationsverstärkers 5, so daß damit ein großes Signal und damit ein verbessertes Signal-zu-Rausch-Verhältnis erzielt wird.

Schließlich ist ein sogenannter Reflektionsbetriebs möglich, in dem die Signalerzeugungseinrichtung 9 ein Spannungssignal erzeugt und an den Ultraschallwandler 1 liefert, wobei allerdings dabei kein Meßbetrieb durchgeführt werden soll, sondern vielmehr ein Prüfbetrieb stattfindet, im Rahmen dessen z.B. die Ausbreitungszeit in einem im Ultraschalldurchflußmeßgerät vorgesehenen, nicht weiter dargestellten Ultraschallwellenleiter gemessen werden kann, wie weiter oben ausgeführt. Dabei ist vorgesehen, daß die Signalerzeugungseinrichtung 9 Spannungssignale erzeugt und ausgibt, um zurückreflektierte Signale messen zu können, wobei für eine gute Erfassung und Verstärkung der zurückreflektierten Signale ebenfalls vorgesehen ist, daß die Ansteuereinrichtung 12 das Rückkoppelelement 11 derart steuert, daß dessen Impedanz eher groß ist, und zwar aus den schon im Zusammenhang mit der Beschreibung des Empfangsbetriebs genannten Gründen.

Aus Fig. 3 ist nun eine Sende- und Empfangsschaltung für ein Ultraschalldurchflußmeßgerät gemäß einem zweiten bevorzugten Ausführungsbeispiel der Erfindung ersichtlich. Dabei entspricht diese Sende- und Empfangsschaltung im wesentlichen der aus Fig. 2 ersichtlichen Sende- und Empfangsschaltung gemäß dem ersten bevorzugten Ausführungsbeispiel der Erfindung, wobei jedoch keine das Rückkoppelelement 11 ansteuernde Ansteuereinrichtung 12 vorgesehen ist. Eine solche Ansteuereinrichtung ist nämlich nicht erforderlich, da das Rückkoppelelement 11 gemäß dem zweiten bevorzugten Ausführungsbeispiel der Erfindung als nichtlineares Element ausgebildet ist.

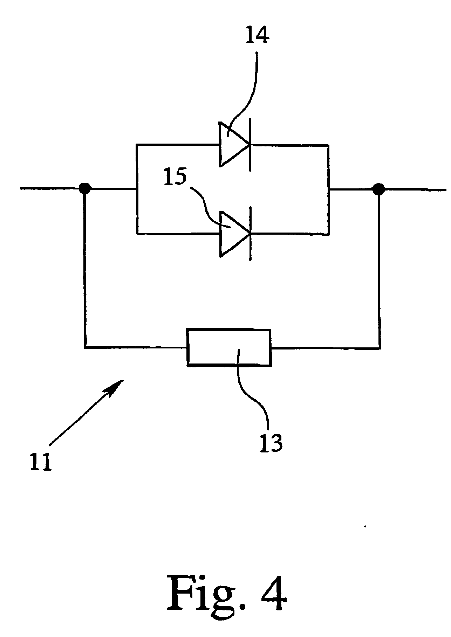

Konkret ist das Rückkoppelelement 11 als nichtlineares Element derart ausgebildet, wie aus Fig. 4 ersichtlich: Durch die Anordnung von, einander parallel geschaltet, einem Widerstand 13 und einem Paar zueinander entgegengesetzt ausgerichteter und einander parallel geschalteter Dioden 14, 15 wird nämlich ein derartiges nichtlineares Element gebildet, das bei einem über den Ultraschallwandleranschluß 4 erfaßten Signal eine größere Impedanz und bei von der Signalerzeugungseinrichtung 9 erzeugtem Signal eine geringere Impedanz "gesehen" wird. Dabei werden der Widerstand 13 sowie die Dioden 14 und 15 derart dimensioniert, daß für den Reflektionsbetrieb eine Kompromißlösung gefunden wird, also hinreichende Sendeleistung bei einem noch ausreichenden Verstärkungsfaktor erzielt wird.

## Patentansprüche

1. Sende- und Empfangsschaltung für ein Ultraschalldurchflußmeßgerät, mit einem Ultraschallwandleranschluß (4) zum Anschluß an einen Ultraschallwandler (1) des Ultraschalldurchflußmeßgeräts, einem Verstärker (5) mit einem ersten Eingang (6) und einem zweiten Eingang (7) und einer Signalerzeugungseinrichtung (9) zur Ansteuerung des Ultraschallwandlers (1), wobei der erste Eingang (6) des Verstärkers mit der Signalerzeugungseinrichtung (9) verbunden ist, der zweite Eingang (7) des Verstärkers (5) einerseits mit dem Ultraschallwandleranschluß (4) und andererseits über ein Rückkoppelelement (11) mit dem Ausgang (8) des Verstärkers (5) verbunden ist, **dadurch gekennzeichnet, daß** die Impedanz des Rückkoppelelements (11) derart veränderbar ist, daß die Impedanz im Sendebetrieb einen relativ kleinen Wert und im Empfangsbetrieb einen eher größeren Wert annimmt.

2. Sende- und Empfangsschaltung nach Anspruch 1, **dadurch gekennzeichnet, daß** eine Ansteuereinrichtung (12) zur Steuerung der Impedanz des Rückkoppelelements (11) vorgesehen ist.

3. Sende- und Empfangsschaltung nach Anspruch 2, **dadurch gekennzeichnet, daß** als Rückkoppelelement (11) ein elektrischer Schalter, ein elektrisches Potentiometer oder ein Fotokoppler vorgesehen ist.

4. Sende- und Empfangsschaltung nach Anspruch 1, **dadurch gekennzeichnet, daß** als Rückkoppelelement (11) ein nichtlineares Element vorgesehen ist, das bei einem über den Ultraschallwandleranschluß (4) erfaßten Signal eine höhere Impedanz und bei von der Signalerzeugungseinrichtung (9) erzeugtem Signal eine geringere Impedanz aufweist.

5. Sende- und Empfangsschaltung nach Anspruch 4, **dadurch gekennzeichnet, daß** als nichtlineares Element eine Schaltung mit wenigstens einem Widerstand (13) und Dioden (14, 15) vorgesehen ist.

6. Sende- und Empfangsschaltung nach einem der Ansprüche 1 bis 5, **dadurch gekennzeichnet, daß** der Verstärker (5) einen nichtinvertierenden Eingang und einen invertierenden Eingang aufweist, wobei der nichtinvertierende Eingang als erster Eingang (6) und der invertierende Eingang als zweiter Eingang (7) vorgesehen ist.

7. Ultraschalldurchflußmeßgerät mit einer Sende- und Empfangsschaltung nach einem der Ansprüche 1 bis 6.

8. Verfahren zum Betreiben einer Sende- und Empfangsschaltung eines Ultraschalldurchflußmeßgeräts, wobei ein mit einem Ultraschallwandler (1) des Ultraschalldurchflußmeßgeräts verbundener Ultraschallwandleranschluß (4), ein Verstärker (5) mit einem ersten Eingang (6) und einem zweiten Eingang (7) und eine Signalerzeugungseinrichtung (9) vorgesehen sind, der erste Eingang (6) des Verstärkers (5) mit der Signalerzeugungseinrichtung (9) verbunden ist, der zweite Eingang (7) des Verstärkers (5) einerseits mit dem Ultraschallwandleranschluß (4) und andererseits über ein Rückkoppelelement (11) mit dem Ausgang (8) des Verstärkers (5) verbunden ist und der Ultraschallwandler (1) von der Signalerzeugungseinrichtung angesteuert wird, **dadurch gekennzeichnet, daß** die Impedanz des Rückkoppelelements (11) derart gesteuert wird, daß die Impedanz im Sendebetrieb einen relativ kleinen Wert und im Empfangsbetrieb einen eher größeren Wert annimmt.

9. Verfahren nach Anspruch 8, **dadurch gekennzeichnet, daß** die Sende- und Empfangsschaltung abwechselnd in einem Sendebetrieb und in einem Empfangsbetrieb betrieben wird, wobei im Sendebetrieb die Signalerzeugungseinrichtung (9) den Ultraschallwandler (1) mit einem Spannungssignal ansteuert und die Impedanz des Rückkoppelelements (11) auf einen geringeren Wert gesteuert wird und im Empfangsbetrieb keine Ansteuerung des Ultraschallwandlers (1) mit einem Spannungssignal erfolgt und die Impedanz des Rückkoppelelements (11) auf einen höheren Wert gesteuert wird.

10. Verfahren nach Anspruch 8 oder 9, **dadurch gekennzeichnet, daß** die Sende- und Empfangsschaltung alternativ zu dem Sendebetrieb und dem Empfangsbetrieb in einem Reflektionsbetrieb betrieben wird, in dem die Signalerzeugungseinrichtung (9) den Ultraschallwandler (1) mit einem Spannungssignal ansteuert und die Impedanz des Rückkoppelelements (11) auf einen höheren Wert gesteuert wird.

## Claims

1. Transmitting and receiving circuitry for an ultrasonic flowmeter having an ultrasound transducer interface (4) for connection to an ultrasound transducer (1) of the ultrasonic flowmeter, an amplifier (5) having a first input (6) and a second input (7) and a signal generator (9) for activating the ultrasound transducer (1) wherein the first input (6) of the amplifier (5) is connected to the signal generator (9), the second input (7) of the amplifier (5) is connected both to the ultrasound transducer interface 84) and, via a feedback element (11), to the output (8) of the amplifier (5), **characterized in that** the impedance of the feedback element (11) can be varied in such a manner that the impedance has a relatively small value in the transmitting mode and adopts a greater value in the receiving mode.

2. Transmitting and receiving circuitry according to claim 1, **characterized in that** a selector unit (12) is provided for selectively controlling the impedance of the feedback element (11).

3. Transmitting and receiving circuitry according to claim 2, **characterized in that** the feedback element (11) is provided as an electric switch, an electric potentiometer or a photoelectric coupler.

4. Transmitting and receiving circuitry according to claim 1, **characterized in that** the feedback element (11) is a nonlinear device that responds with a higher impedance to a signal detected via the ultrasound transducer interface (4) and with a lower impedance to a signal generated by the signal generator (9).

5. Transmitting and receiving circuitry according to claim 4, **characterized in that** the nonlinear device is provided as a circuit comprising at least one resistor (13) and diodes (14, 15).

6. Transmitting and receiving circuitry according to any one of claims 1 to 5, **characterized in that** the amplifier (5) has a non-inverting input and an inverting input, the non-inverting input constituting the first input (6) and the inverting input constituting the second input (7).

7. An ultrasonic flowmeter incorporating a transmitting and receiving circuitry as in claim 1 or 2.

8. Method for operating a transmitting and receiving circuitry system of an ultrasonic flowmeter that includes an ultrasound transducer interface (4) connected to an ultrasound transducer (1) of the ultrasonic flowmeter, an amplifier (5) with a first input (6) and a second input (7), and a signal generator (9), where the first input (6) of the amplifier (5) connects to the signal generator (9) while the second input (7) of the amplifier (5) connects both to the ultrasound transducer interface (4) and via a feedback element (11) to the output (8) of the amplifier (5), and the ultrasound transducer (1) is activated by the signal generator, **characterized in that** the impedance has a relatively small value in the transmitting mode and adopts a greater value in the receiving mode.

9. Method according to claim 8, **characterized in that** the transmitting and receiving circuitry system alternates between a transmitting mode wherein the signal generator (9) feeds a voltage signal to the ultrasound transducer (1) causing the impedance of the feedback element (11) to be adjusted to a lower value and a receiving mode wherein no voltage signal is sent to the ultrasound transducer (1) and the impedance of the feedback element (11) is adjusted to a higher value.

10. Method according to claim 8 or 9, **characterized in that** as an alternative to the transmitting and receiving modes, the transmitting and receiving circuitry system is operated in a reflectance mode in which the signal generator (9) feeds a voltage signal to the ultrasound transducer (1) and the impedance of the feedback element (11) is adjusted to a higher value.

## Revendications

1. Circuit d'émission et de réception pour un débitmètre à ultrasons, comprenant une borne de convertisseur d'ultrasons (4) pour le raccordement à un convertisseur d'ultrasons (1) du débitmètre à ultrasons, un amplificateur (5) muni d'une première entrée (6) et d'une deuxième entrée (7) et un dispositif générateur de signal (9) pour commander le convertisseur d'ultrasons (1), la première entrée (6) de l'amplificateur étant reliée au dispositif générateur de signal (9), la deuxième entrée (7) de l'amplificateur (5) étant reliée d'un côté à la borne de convertisseur d'ultrasons (4) et de l'autre côté, par le biais d'un élément de contre-réaction (11), à la sortie (8) de l'amplificateur (5), **caractérisé en ce que** l'impédance de l'élément de contre-réaction (11) peut être modifiée de telle sorte que l'impédance en mode émission prend une valeur relativement faible et une valeur plutôt élevée en mode réception.

2. Circuit d'émission et de réception selon la revendication 1, **caractérisé en ce qu'**il est prévu un dispositif de commande (12) pour commander l'impédance de l'élément de contre-réaction (11).

3. Circuit d'émission et de réception selon la revendication 2, **caractérisé en ce que** l'élément de contre-réaction (11) prévu est un commutateur électrique, un potentiomètre électrique ou un photocoupleur.

4. Circuit d'émission et de réception selon la revendication 1, **caractérisé en ce que** l'élément de contre-réaction (11) prévu est un élément non linéaire qui présente une impédance plus élevée en présence d'un signal détecté par le biais de la borne de convertisseur d'ultrasons (4) et une impédance plus faible en présence d'un signal généré par le dispositif générateur de signal (9).

5. Circuit d'émission et de réception selon la revendication 4, **caractérisé en ce que** l'élément non linéaire prévu est un circuit comprenant au moins une résistance (13) et des diodes (14, 15).

6. Circuit d'émission et de réception selon l'une des revendications 1 à 5, **caractérisé en ce que** l'amplificateur (5) présente une entrée non inverseuse et une entrée inverseuse, l'entrée non inverseuse étant prévue comme première entrée (6) et l'entrée inverseuse comme deuxième entrée (7).

7. Débitmètre à ultrasons muni d'un circuit d'émission et de réception selon l'une des revendications 1 à 6.

8. Procédé de fonctionnement d'un circuit d'émission et de réception d'un débitmètre à ultrasons, une borne de convertisseur d'ultrasons (4) raccordée à un convertisseur d'ultrasons (1) du débitmètre à ultrasons, un amplificateur (5) muni d'une première entrée (6) et d'une deuxième entrée (7) et un dispositif générateur de signal (9) étant prévus, la première entrée (6) de l'amplificateur (5) étant reliée au dispositif générateur de signal (9), la deuxième entrée (7) de l'amplificateur (5) étant reliée d'un côté à la borne de convertisseur d'ultrasons (4) et de l'autre côté, par le biais d'un élément de contre-réaction (11), à la sortie (8) de l'amplificateur (5) et le convertisseur d'ultrasons (1) étant commandé par le dispositif générateur de signal, **caractérisé en ce que** l'impédance de l'élément de contre-réaction (11) est modifiée de telle sorte que l'impédance en mode émission prend une valeur relativement faible et une valeur plutôt élevée en mode réception.

9. Procédé selon la revendication 8, **caractérisé en ce que** le circuit d'émission et de réception fonctionne en alternance dans un mode d'émission et dans un mode de réception, en mode d'émission le dispositif générateur de signal (9) commandant le convertisseur d'ultrasons (1) avec un signal de tension et l'impédance de l'élément de contre-réaction (11) étant commandée à une valeur plus faible et, en mode de réception, aucune commande du convertisseur d'ultrasons (1) avec un signal de tension n'ayant lieu et l'impédance de l'élément de contre-réaction (11) étant commandée à une valeur plus élevée.

10. Procédé selon la revendication 8 ou 9, **caractérisé en ce que** le circuit d'émission et de réception, en alternative du mode d'émission et du mode de réception, fonctionne dans un mode de réflexion dans lequel le dispositif générateur de signal (9) commande le convertisseur d'ultrasons (1) avec un signal de tension et l'impédance de l'élément de contre-réaction (11) est commandée à une valeur plus élevée.
